# EUROPÄISCHE PATENTSCHRIFT

(11) **EP 3 320 312 B1**
(45) Veröffentlichungstag und Bekanntmachung des Hinweises auf die Patenterteilung: **07.02.2024**
(21) Anmeldenummer: 16741272.5
(22) Anmeldetag: 08.07.2016
(51) Int. Cl.: G01H 13/00

(54) **VERFAHREN UND VORRICHTUNG ZUR MESSUNG EINER RESONANZFREQUENZ EINES IN ULTRASCHALL VERSETZTEN WERKZEUGS FÜR DIE SPANENDE BEARBEITUNG**
METHOD AND DEVICE FOR MEASURING A RESONANCE FREQUENCY OF A TOOL ULTRASONICALLY VIBRATED FOR MACHINING
PROCÉDÉ ET DISPOSITIF POUR MESURER LA FRÉQUENCE DE RÉSONANCE D'UN OUTIL MIS EN VIBRATIONS PAR ULTRASONS POUR UN USINAGE PAR ENLÈVEMENT DE COPEAUX

(30) Priorität: 08.07.2015 DE 102015212809
(43) Veröffentlichungstag der Anmeldung: 16.05.2018
(73) Patentinhaber: DMG MORI Ultrasonic Lasertec GmbH, 55758 Stipshausen (DE)
(72) Erfinder: KETELAER, Jens, 65205 Wiesbaden (DE)
(74) Vertreter: MERH-IP Matias Erny Reichl Hoffmann Patentanwälte PartG mbB
(86) Internationale Anmeldenummer: PCT/EP2016/066331
(87) Internationale Veröffentlichungsnummer: WO 2017/005918

(56) Entgegenhaltungen:
- EP-A1- 2 353 737
- EP-A1- 2 803 455
- DE-A1-102009 027 688

## Beschreibung

Die vorliegende Erfindung betrifft ein Verfahren zur Messung einer Resonanzfrequenz eines in eine Ultraschallschwingung versetzten Werkzeugs für die spanende Bearbeitung eines Werkstücks, wobei ein Arbeitssignal mit einer Arbeitsfrequenz durch einen Generator in einen Werkzeughalter mit dem Werkzeug zur Erzeugung der Ultraschallschwingung des Werkzeugs eingestrahlt wird.

### HINTERGRUND DER ERFINDUNG

In Stand der Technik sind Werkzeugmaschinen bekannt, bei denen bei einer spanenden Bearbeitung eines Werkstücks durch ein Werkzeug der Rotationsbewegung des Werkzeugs eine Ultraschallschwingung des Werkzeugs überlagert werden kann.

Die EP 1 763 416 B1 beschreibt in diesem Zusammenhang ein Werkzeug mit einem Werkzeughalter, der an einem ersten Ende eine Werkzeughalteraufnahme zum Adaptieren an eine drehbare Spindelnase, und an einem zweiten, dem ersten gegenüberliegenden Ende eine Werkzeugaufnahme aufweist, und mit einem in die Werkzeugaufnahme einsetzbaren Werkzeugkopf, wobei der Werkzeughalter einen Schwingungsmotor umfasst.

Überdies beschreibt die EP 2 353 737 A1 ein Verfahren zur ultraschallunterstützten Bearbeitung, z.B. beim Trennen, Bohren oder Fräsen, wobei eine Sonotrode zur Einbringung der mechanischen Schwingungen in und/oder auf ein zu bearbeitendes Material von einem Konverter zur Wandlung elektrischer Schwingungen in mechanische Schwingungen zu Schwingungen angeregt wird.

Ferner beschreibt die EP 2 803 455 A1 eine Schneidevorrichtung, die zum Schneiden eines Prozessguts, insbesondere eines Nahrungsmittels, vorgesehen ist und in deren Werkzeug Ultraschallenergie von einer Ultraschalleinheit eingekoppelt wird. Die Ultraschalleinheit wird dabei derart steuert, dass die Frequenz der zugeführten Ultraschallenergie zwischen wenigstens einer ersten und einer zweiten Arbeitsfrequenz umgeschaltete wird, um so ein optimales Schwingungsverhalten des Werkzeugs bei der Bearbeitung zu erzielen.

Bei einer solchen Werkzeugmaschine bilden ein Ultraschallwandler im Werkzeughalter, der die Ultraschallschwingung des Werkzeugs erzeugt, ein Schwingkörper und das im Werkzeughalter eingesetzte Werkzeug ein schwingungsfähiges System, das durch ein elektrisches Signal zu mechanischen Schwingungen angeregt wird, wobei man die größtmögliche mechanische Schwingungsamplitude erhält, wenn man das schwingungsfähige System mit seiner Resonanzfrequenz anregt.

Dabei tritt das Problem auf, dass sich die Resonanzfrequenz im Verlauf eines Bearbeitungsprozesses ändern kann. Dafür gibt es im Wesentlichen drei Gründe. Zum einen kann sich das schwingungsfähige System oder Teile davon bei der Bearbeitung erwärmen, wodurch sich die Materialeigenschaften ändern. Dies führt zu einem Temperaturdrift der Resonanzfrequenz.

Zum anderen wird die Schwingung durch den Kontakt des Werkzeugs mit dem zu bearbeitenden Werkstück durch die Bearbeitungskräfte gedämpft, wobei die Resonanzfrequenz des Systems bei einer gedämpften Schwingung niedriger ist als die freie Resonanzfrequenz des Systems.

Außerdem wird durch die Ankopplung des Schwingungssystems an das Werkstück ein neues, gekoppeltes Schwingungssystem gebildet, dessen Resonanzfrequenz in der Regel höher ist als die freie Resonanzfrequenz. Diese drei Effekte treten in der Praxis kombiniert auf, wobei es von der konkreten Bearbeitungssituation abhängt, welcher Effekt dominiert.

Außerdem ist zu beachten, dass neben der Verschiebung der Resonanzfrequenz auch eine Änderung der Leistung eine Rolle spielt, da durch die Wechselwirkung des Werkzeugs mit dem Werkstück eine höhere Ausgangsspannung nötig sein kann, um die gleiche Leistung zu erzielen.

Wenn nun mit der freien Resonanzfrequenz angeregt wird, die tatsächliche Resonanzfrequenz des Systems sich bei der Bearbeitungjedoch von dieser unterscheidet, erhält man eine Schwingung des Werkzeugs mit kleinerer Amplitude, wodurch die Bearbeitung an Effizienz verliert.

Aus diesem Grund ist es wichtig, eine Änderung der Resonanzfrequenz des schwingfähigen Systems zu detektieren, um die Schwingungsparameter entsprechend anpassen zu können, so dass wieder die größtmögliche Schwingungsamplitude erreicht wird.

Aus Anwendungen des Ultraschall-Schweißens ist es bekannt, zu diesem Zweck sowohl die freie Resonanzfrequenz als auch eine Änderung der Resonanzfrequenz des Systems aus Ausgangswerten des Generators zu bestimmen, der das elektrische Signal für die mechanische Schwingung an den Piezo-Antrieb im Werkzeughalter liefert. Der Generator sieht von dem über eine induktive Übertragerstrecke angeschlossenen schwingungsfähigen System eine elektrische Impedanz, die frequenzabhängig ist und bei der mechanischen Resonanzfrequenz ein Minimum hat. Dementsprechend regelt der Generator im Fall einer Verschiebung der Resonanzfrequenz seine Frequenz so lange nach, bis er wieder das Impedanzminimum erreicht. Neben der Frequenz des Impedanzminimums ändert sich durch die Bearbeitung auch der Impedanzwert selbst, d.h. um die gleiche Leistung zu treiben ist eine höhere Ausgangsspannung notwendig.

Diese Methode eignet sich jedoch nicht für eine spanende Bearbeitung, weil dort, anders als beim Ultraschall-Schweißen die Impedanzkurven der genutzten Sonotroden mit eingesetzten Werkzeugen sehr viel komplizierter sind: Einerseits gibt es deutlich mehr Impedanzminima durch die vielen unterschiedlichen Schwingungsmoden der kompliziert geformten Werkzeuge. Andererseits sind die Einflussgrößen, die eine Verschiebung der Resonanzfrequenz bewirken, extremer in ihrer Wirkung, d.h. die Frequenzverschiebung kann derart groß sein, dass weitere Impedanzminima übersprungen werden. Beim Schweißen übt eine Sonotrode über den gesamten Prozess annähernd gleichen Druck auf das Werkstück aus. Dies führt zu einer einmaligen Frequenzverschiebung, die bei wiederkehrenden Prozessen gleich ist und bei der sich das Impedanzminimum immer eindeutig identifizieren lässt. Dagegen ändert sich die Frequenzverschiebung bei der spanenden Bearbeitung laufend aufgrund wechselnder Eingriffsverhältnisse des Werkzeugs in das Material und die Zuordnung ist wie oben beschrieben häufig nicht mehr nur aufgrund einer Impedanzmessung möglich.

Dies liegt daran, dass dort sehr viele unterschiedlich geformte Werkzeuge zum Einsatz kommen, zum Beispiel Bohrer und Fräser mit unterschiedlichen Abmessungen und Schneidwerkzeuge mit verschiedenen Schneidengeometrien, was zu einer größeren Varianz in der Form der Impedanzkurve in Vergleich zum Ultraschall-Schweißen führt. Weiterhin ist bei einer spanenden Bearbeitung im Allgemeinen die auf das schwingfähige System wirkende Kraft deutlich größer, so dass die Veränderung der Impedanzkurve sehr viel stärker ausgeprägt ist.

Zudem lässt sich aufgrund der immer wiederkehrenden Bearbeitungsschritte beim Schweißen der dominierende Frequenzverschiebungseffekt gut vorhersagen, was die möglichen Reaktionen des Systems einschränkt. Dagegen müssen bei einer spanenden Bearbeitung alle Effekte berücksichtigt werden, weswegen die Vorhersagemöglichkeiten bzw. die Möglichkeiten zur Einschränkung der Regelungsparameter unzureichend sind.

Darüber hinaus ist es nicht möglich, Biegeschwingungen o.ä. von axialen Schwingungsmoden nur aufgrund der Impedanzmessung zu unterscheiden. Ebenso gibt es rein elektrische Resonanzen, die gar keine Schwingungen erzeugen. Diese parasitären Effekte können mit den bekannten Methoden nicht erkannt werden.

Ein weiteres Problem bei der Überwachung der Schwingung basierend auf der Generatorleistung ist, dass nicht bekannt ist, welcher Anteil der Leistung tatsächlich in die Schwingungserzeugung fließt und welcher Teil in andere Prozesse wie z. B. in die Erwärmung der beteiligten Komponenten. Daher ist es möglich, dass Änderungen in der Schwingung nicht detektiert werden, weil sich zwar der Anteil der vom Generator bereitgestellten Leistung, der in die Schwingungserzeugung fließt ändert, nicht aber die gesamte, vom Generator abgegebene Leistung.

### ZUSAMMENFASSUNG DER ERFINDUNG

Eine Aufgabe der vorliegenden Erfindung ist es daher, ein Verfahren zur Messung einer Resonanzfrequenz eines in eine Ultraschallschwingung versetzten Werkzeugs bereitzustellen, mit dem die obigen Probleme vermieden werden.

Insbesondere ist es eine Aufgabe der vorliegenden Erfindung, ein Verfahren bereitzustellen, das es ermöglicht, eine höhere Bearbeitungsgenauigkeit bei der spanenden Ultraschallbearbeitung eines Werkstücks zu erreichen.

Des Weiteren ist es eine Aufgabe der vorliegenden Erfindung, eine Vorrichtung und eine Werkzeugmaschine bereitzustellen, mit der das erfindungsgemäße Verfahren ausgeführt werden kann.

Diese Aufgaben werden gelöst durch ein Verfahren nach Anspruch 1, eine Vorrichtung nach Anspruch 5 und eine Vorrichtung nach Anspruch 11. Die abhängigen Ansprüche beziehen sich auf vorteilhafte Ausführungsbeispiele des erfindungsgemäßen Verfahrens bzw. der erfindungsgemäßen Vorrichtungen.

Das erfindungsgemäße Verfahren zur Messung einer Resonanzfrequenz eines in eine Ultraschallschwingung versetzten Werkzeugs während der spanenden Bearbeitung eines Werkstücks hat die Schritte: a) Einstrahlen eines Arbeitssignals mit einer Arbeitsfrequenz durch einen Generator in einen Werkzeughalter mit dem Werkzeug zur Erzeugung der Ultraschallschwingung des Werkzeugs; b) nach Beginn der spanenden Bearbeitung des Werkstücks Einstrahlen eines Testsignals mit einer um die Arbeitsfrequenz variierenden Testfrequenz und geringerer Leistung als eine Leistung des Arbeitssignals durch den Generator in den Werkzeughalter; c) Erzeugen eines Sensorsignals aus der Ultraschallschwingung des Werkzeugs durch eine im Werkzeughalter angeordnete Sensoreinrichtung; d) Auslesen des Sensorsignals durch eine Ausleseeinrichtung; e) Zerlegen des Sensorsignals in ein Frequenzspektrum, das eine Hauptfrequenz und eine Nebenfrequenz aufweist, durch eine Analyseeinrichtung; f) Ermitteln der Hauptfrequenz des Frequenzspektrums aus der Arbeitsfrequenz und Ermitteln der Resonanzfrequenz aus der Nebenfrequenz des Frequenzspektrums; g) Vergrößern einer Schwingungsamplitude der Ultraschallschwingung des Werkzeugs (90) durch g2) Erhöhen der Leistung des Arbeitssignals (P1) durch eine zweite Regelungseinrichtung (160) basierend auf einer Höhe eines Peaks in dem Frequenzspektrum bei der Arbeitsfrequenz (f1), und/oder durch g3) Erhöhen einer Schwingungsamplitude des Arbeitssignals (S1) durch eine zweite Regelungseinrichtung (160) basierend auf einer Differenz zwischen der Arbeitsfrequenz (f1) und der gemessenen Resonanzfrequenz (f2).

Die Sensoreinrichtung kann beispielsweise als piezoelektrisches Sensorelement oder als Dehnungsmesstreifen mit einer elektronischen Schaltung ausgebildet sein. Somit kann die Resonanzfrequenz eines Werkzeugs direkt aus der mechanischen Schwingung bestimmt werden, ohne dass dazu elektrische Äquivalentgrößen des Generators herangezogen werden müssen, die ungenau sein können. Außerdem ist die Messung der Resonanzfrequenz während der Ultraschallbearbeitung möglich, so dass der ermittelte Wert der Resonanzfrequenz zu jedem gewünschten Zeitpunkt, zu dem das Werkzeug schwingt, aktualisiert werden kann. Dies in von großem Vorteil in folgender Situation: Vor dem Eintritt des Werkzeugs kann die Resonanzfrequenz der Schwingung anhand der elektrischen Impedanz, die der Generator sieht, oder anhand der Phasenverschiebung zwischen Strom und Spannung am Ausgang des Generators bestimmt werden. Diese Resonanzfrequenz ändert sich jedoch in der Regel beim Eintritt des Werkzeugs in das Werkstück. Mit dem erfindungsgemäßen Verfahren kann diese Änderung gemessen werden.

Der Vorteil, ein zusätzliches Testsignal mit variabler Frequenz einzustrahlen, liegt darin, dass eine potentielle Verschiebung der Resonanzfrequenz völlig unabhängig von der Schwingungserzeugung ermittelt werden kann. Das heißt, man muss nicht die Arbeitsfrequenz variieren, um eine verschobene Resonanzfrequenz zu finden, wodurch insgesamt mit geringerer Leistung eingestrahlt würde. Die Testfrequenz kann beispielsweise mit einem Sweep-Verfahren variiert werden.

Ferner ist es möglich, auf die mechanische Amplitude zu schließen, ohne auf Informationen über die Breite des Peaks (die sogenannte Güte) zurückzugreifen, und die Amplitude der mechanischen Schwingung zu vergrößern bzw. zu stabilisieren, ohne dass die Schwingungsfrequenz verändert wird, und auf diese Weise die Effizienz und Genauigkeit der Bearbeitung zu erhöhen.

Vorzugsweise hat das erfindungsgemäße Verfahren den weiteren Schritt: g1) Anpassen der Arbeitsfrequenz auf die gemessene Resonanzfrequenz durch eine erste Regelungseinrichtung zur Vergrößerung der Schwingungsamplitude der Ultraschallschwingung des Werkzeugs.

Vorzugsweise hat das erfindungsgemäße Verfahren den weiteren Schritt: h) Anpassen einer Ausgangsspannung des Generators zur Stabilisierung der Leistung bei der Bearbeitung.

Neben der Lage der Resonanzen auf der Frequenzachse ändert sich durch die Wechselwirkung zwischen Werkzeug und Werkstück auch der Impedanzwert auf der y-Achse der Impedanzkurve. Deswegen ist es von Vorteil, wenn nicht nur die Arbeitsfrequenz nachgeführt wird, sondern zusätzlich auch die Ausgangsspannung des Generators so geregelt wird, dass eine konstante Leistung bei der Bearbeitung erreicht wird.

Somit kann die Frequenz der Ultraschallschwingung des Werkzeugs in dem Fall, dass sie von der tatsächlichen Resonanzfrequenz abweicht, auf die tatsächliche Resonanzfrequenz eingestellt werden und so die Effizienz der Bearbeitung gesteigert werden. Zudem kann so auch die mechanische Schwingung an der Werkzeugspitze stabilisiert werden und Schwankungen der Amplitude der mechanischen Schwingung ausgeglichen werden, was vorteilhaft für die Genauigkeit der Werkstückbearbeitung ist. Bei einer Anpassung der Arbeitsfrequenz, ohne die momentane Resonanzfrequenz genau zu kennen, besteht die Gefahr, dass man mit der geänderten Arbeitsfrequenz falsche Eigenschwingungsformen des Systems wie Torsions- oder Biegeschwingungen trifft. Dieses Problem tritt bei einer Frequenzanpassung, die auf dem Sensorsignal basiert, nicht auf.

Vorzugsweise werden die Schritte d) bis g1), die Schritte d) bis g2) oder die Schritte d) bis g3) während der spanenden Bearbeitung des Werkstücks bei kontinuierlicher oder quasikontinuierlicher Einstrahlung des Testsignals und kontinuierlicher oder quasikontinuierlicher Variation der Testfrequenz mehrfach wiederholt, wobei bei Schritt g1) die Anpassung der Arbeitsfrequenz auf die zuletzt gemessene Resonanzfrequenz automatisch erfolgt oder bei Schritt g2) die Erhöhung der Leistung des Arbeitssignals basierend auf der zuletzt gemessenen Höhe des Peaks in dem Frequenzspektrum bei der Arbeitsfrequenz automatisch erfolgt oder bei Schritt g3) die Erhöhung der der Schwingungsamplitude des Arbeitssignals basierend auf der zuletzt gemessenen Resonanzfrequenz automatisch erfolgt.

Dies hat den Vorteil, dass die Anpassung auf die Resonanzfrequenz bei sich ändernder Resonanzfrequenz nicht manuell vorgenommen werden muss, wodurch der Bearbeitungsprozess für den Benutzer vereinfacht wird.

Vorzugsweise wird bei Schritt a) das Arbeitssignal über eine erste Übertragungsstrecke eingestrahlt und bei Schritt d) das Sensorsignal von der Sensoreinrichtung über eine zweite Übertragungsstrecke in die Ausleseeinrichtung übertragen, wobei die zweite Übertragungsstrecke von der ersten Übertragungsstrecke elektrisch isoliert ist.

Dabei kann das Testsignal ebenfalls über die erste Übertragungsstrecke eingestrahlt werden, also dem Arbeitssignal überlagert werden, oder das Testsignal kann über eine weitere, von der zweiten Übertragungsstrecke elektrisch isolierte Übertragungsstrecke eingestrahlt werden. Dies hat den Vorteil, dass in jedem Fall das Sensorsignal weder durch das Arbeitssignal noch durch das Testsignal beeinflusst wird und somit die Detektion der Resonanzfrequenz parallel zur Schwingungserzeugung ablaufen kann.

Vorzugsweise werden die Schritte b) bis f) während der spanenden Bearbeitung des Werkstücks zur kontinuierlichen Überwachung der Resonanzfrequenz wiederholt.

Somit kann für bestimmte Bearbeitungsaufgaben die tatsächliche Resonanzfrequenz auch nur protokolliert werden, ohne dass eine Anpassung der Arbeitsfrequenz erfolgt.

Vorzugsweise wird das Werkzeug vor Beginn der spanenden Bearbeitung des Werkstücks in Rotation versetzt.

Mit einem rotierenden Werkzeug, dessen Rotation eine Ultraschallschwingung überlagert ist, können insbesondere harte und spröde Werkstoffe gut bearbeitet werden.

Vorzugsweise hat das erfindungsgemäße Verfahren die weiteren Schritte: Kompensieren einer zwischen dem Generator und dem Werkzeughalter fließenden Blindleistung durch eine Kompensationsschaltung; Anpassen einer Blindleistungskompensation basierend auf einer Differenz zwischen der Arbeitsfrequenz und der gemessenen Resonanzfrequenz.

Die Kompensationsschaltung kann als Parallelschaltung, Serienschaltung oder Kombinationsschaltung aus einer oder mehrerer Kapazitäten und/oder einer oder mehrerer Induktivitäten ausgebildet sein. Beispielsweise kann die Kompensationsschaltung als eine parallel zu dem ersten Transformator geschaltete Kapazität ausgebildet sein. Dies hat den Vorteil, dass die Kompensation der von der komplexen elektrischen Impedanz abhängigen und daher frequenzabhängigen Blindleistung durch eine Änderung der Kapazitäten und/oder der Induktivitäten angepasst werden kann.

Vorzugsweise erfolgt das Anpassen einer Blindleistungskompensation durch Schaltung eines Relais.

Dies hat den Vorteil, dass so die Werte der Kapazitäten und/oder der Induktivitäten in einfacher Weise geändert werden können.

Die erfindungsgemäße Vorrichtung zum Messen einer Resonanzfrequenz eines in eine Ultraschallschwingung versetzten Werkzeugs während der spanenden Bearbeitung eines Werkstücks weist auf: einen Werkzeughalter mit dem Werkzeug zur spanenden Bearbeitung des Werkstücks, einen Generator zum Einstrahlen eines Arbeitssignals mit einer Arbeitsfrequenz in den Werkzeughalter zur Erzeugung der Ultraschallschwingung des Werkzeugs und zum Einstrahlen eines Testsignals mit einer um die Arbeitsfrequenz variierenden Testfrequenz und geringerer Leistung als eine Leistung des Arbeitssignals in den Werkzeughalter, eine im Werkzeughalter angeordnete Sensoreinrichtung zum Erzeugen eines Sensorsignals aus der Ultraschallschwingung des Werkzeugs, eine Ausleseeinrichtung zum Auslesen des Sensorsignals, eine Analyseeinrichtung zum Zerlegen des Sensorsignals in ein Frequenzspektrum, das eine Hauptfrequenz und eine Nebenfrequenz aufweist, eine Einrichtung zum Ermitteln der Hauptfrequenz des Frequenzspektrums aus der Arbeitsfrequenz und zum Ermitteln der Resonanzfrequenz aus der Nebenfrequenz des Frequenzspektrums, und eine zweite Regelungseinrichtung zum Erhöhen der Leistung des Arbeitssignals basierend auf einer Höhe eines Peaks in dem Frequenzspektrum bei der Arbeitsfrequenz und/oder basierend auf einer Differenz zwischen der Arbeitsfrequenz und der gemessenen Resonanzfrequenz zum Vergrößern der Schwingungsamplitude der Ultraschallschwingung des Werkzeugs auf.

Die Sensoreinrichtung kann beispielsweise als piezoelektrisches Sensorelement oder als Dehnungsmesstreifen mit einer elektronischen Schaltung ausgebildet sein. Dabei ist die Hauptfrequenz die Frequenz, bei der das Frequenzspektrum den größten Peak aufweist und die Nebenfrequenz die Frequenz, bei der das Frequenzspektrum den zweitgrößten Peak aufweist. Falls das Frequenzspektrum nur einen Peak aufweist, sind Haupt- und Nebenfrequenz wenigstens annähernd gleich und das schwingungsfähige System wird bereits nahe der Resonanzfrequenz angeregt. Die Resonanzfrequenz eines Werkzeugs kann somit direkt aus der mechanischen Schwingung bestimmt werden, ohne dass dazu elektrische Äquivalentgrößen des Generators herangezogen werden müssen. Außerdem ist die Messung der Resonanzfrequenz während der Ultraschallbearbeitung möglich, so dass der ermittelte Wert der Resonanzfrequenz zu jedem Zeitpunkt, zu dem das Werkzeug schwingt, aktualisiert werden kann.

Dadurch ist es zudem möglich, die Amplitude der mechanischen Schwingung zu vergrößern, ohne die Schwingungsfrequenz zu verändern, und auf diese Weise die Genauigkeit und Effizienz der Bearbeitung zu erhöhen.

Vorzugsweise weist die Vorrichtung eine erste Regelungseinrichtung zum Anpassen der Arbeitsfrequenz auf die gemessene Resonanzfrequenz zur Vergrößerung der Schwingungsamplitude der Ultraschallschwingung des Werkzeugs auf.

Somit kann die Frequenz der Ultraschallschwingung des Werkzeugs in dem Fall, dass sie von der tatsächlichen Resonanzfrequenz abweicht, auf die tatsächliche Resonanzfrequenz eingestellt werden und so die Genauigkeit und die Effizienz der Bearbeitung gesteigert werden.

Vorzugsweise weist die Vorrichtung eine mit der ersten Regelungseinrichtung und/oder mit der zweiten Regelungseinrichtung verbundene Benutzerschnittstelle zum Anpassen der Arbeitsfrequenz oder zum Erhöhen der Leistung des Arbeitssignals durch einen Benutzer der Vorrichtung auf.

Dies hat den Vorteil, dass der Benutzer entscheiden kann, ob, wann und unter welchen Bedingungen die Arbeitsfrequenz geändert soll (z.B. in bestimmten zeitlichen Abständen oder bei Erreichen einer bestimmten Abweichung der gemessenen Resonanzfrequenz von der Arbeitsfrequenz) oder ob die Frequenznachführung automatisiert geschehen soll. Damit wird eine hohe Flexibilität und bedarfsgerechte Anpassung beispielsweise bei verschiedenen Bearbeitungsarten gewährleistet.

Vorzugsweise ist eine erste Übertragungsstrecke zur berührungslosen Übertragung des Arbeitssignals zwischen dem Generator und dem Werkzeughalter als ein erster Transformator ausgebildet und eine zweite Übertragungsstrecke zur berührungslosen Übertragung des Sensorsignals zwischen dem Werkzeughalter und der Auslesevorrichtung als ein zweiter Transformator ausgebildet.

Dabei kann das Testsignal dem Arbeitssignal überlagert und ebenfalls über die erste Übertragungsstrecke eingestrahlt werden, oder das Testsignal kann über eine weitere, von der zweiten Übertragungsstrecke elektrisch isolierte Übertragungsstrecke eingestrahlt werden. Beide Möglichkeiten haben den Vorteil, dass in jedem Fall das Sensorsignal weder durch das Arbeitssignal noch durch das Testsignal beeinflusst wird und somit die Detektion der Resonanzfrequenz parallel zur Schwingungserzeugung ablaufen kann. Die Verwendung von Transformatoren hat den Vorteil, dass die Übertragung berührungslos erfolgen kann und dass keine weitere Energieversorgung für die Übertragung benötigt wird, was vor allem bei einem rotierenden Werkzeug vorteilhaft ist.

Vorzugsweise weist die Vorrichtung eine Kompensationsschaltung zur Kompensation einer zwischen dem Generator und dem Werkzeughalter fließenden Blindleistung auf.

Die Kompensationsschaltung kann als Parallelschaltung, Serienschaltung oder Kombinationsschaltung aus einer oder mehrerer Kapazitäten und/oder einer oder mehrerer Induktivitäten ausgebildet sein. Beispielsweise kann die Kompensationsschaltung als eine parallel zu dem ersten Transformator geschaltete Kapazität ausgebildet sein. Dies hat den Vorteil, dass die Erwärmung des Systems durch die Blindleistung verringert werden kann.

Vorzugsweise weist die Vorrichtung ein Relais zur Anpassung der Kompensation der zwischen dem Generator und dem Werkzeughalter fließenden Blindleistung auf.

Dies hat den Vorteil, dass so die Werte der Kapazitäten und/oder der Induktivitäten der Kompensationsschaltung in einfacher Weise geändert werden können.

Eine erfindungsgemäße Werkzeugmaschine zur spanenden Bearbeitung eines Werkstücks, weist die erfindungsgemäße Vorrichtung auf, wobei die Werkzeugmaschine dazu eingerichtet ist, eine Resonanzfrequenz eines in Ultraschallschwingung versetzten Werkzeugs während der spanenden Bearbeitung eines Werkstücks zu messen.

Eine weitere erfindungsgemäße Vorrichtung zum Ausgeben von Output-Signalen und Empfangen von Input-Signalen weist auf: einen Generator zum gleichzeitigen Erzeugen eines ersten Output-Signals mit einer ersten Frequenz und einer ersten Leistung und eines zweiten Output-Signals mit einer variablen zweiten Frequenz und einer zweiten Leistung, einer Detektionseinrichtung zum Detektieren eines Input-Signals, eine Analyseeinrichtung zum Zerlegen des Input-Signals in ein Frequenzspektrum, das eine Hauptfrequenz und eine Nebenfrequenz aufweist, eine Einrichtung zum Ermitteln der Hauptfrequenz des Frequenzspektrums aus der ersten Frequenz und zum Ermitteln einer Resonanzfrequenz aus der Nebenfrequenz des Frequenzspektrums, und eine zweite Regelungseinrichtung zum Erhöhen der ersten Leistung des ersten Output-Signals basierend auf einer Höhe eines Peaks in dem Frequenzspektrum bei der Hauptfrequenz und/oder basierend auf einer Differenz zwischen der Hauptfrequenz und der ermittelten Resonanzfrequenz.

Somit kann die Erzeugung von ausgehenden Signalen und deren Frequenzanpassung basierend auf eingehenden Signalen kompakt in der gleichen Vorrichtung erfolgen.

Vorzugsweise weist die weitere erfindungsgemäße Vorrichtung eine erste Regelungseinrichtung zum Anpassen der ersten Frequenz des ersten Output-Signals auf die ermittelte Resonanzfrequenz auf.

Vorzugsweise weist die weitere erfindungsgemäße Vorrichtung eine mit der ersten Regelungseinrichtung und/oder mit der zweiten Regelungseinrichtung verbundene Benutzerschnittstelle zum Anpassen der ersten Frequenz oder zum Erhöhen der ersten Leistung durch einen Benutzer der Einrichtung auf.

Dies hat den Vorteil, dass der Benutzer entscheiden kann, ob und wann die erste Frequenz geändert werden soll oder ob die Frequenznachführung automatisiert geschehen soll.

Eine erfindungsgemäße Werkzeugmaschine zur spanenden Bearbeitung eines Werkstücks durch ein in eine Ultraschallschwingung versetztes Werkzeug weist die weitere erfindungsgemäße Vorrichtung auf, wobei die Werkzeugmaschine dazu eingerichtet ist, eine Frequenz der Ultraschallschwingung des Werkzeugs basierend auf einer gemessenen Resonanzfrequenz des in die Ultraschallschwingung versetzten Werkzeugs anzupassen.

### KURZBESCHREIBUNG DER FIGUREN

- Fig. 1: zeigt einen Werkzeughalter in Schnittansicht, der in dem erfindungsgemäßen Verfahren eingesetzt werden kann.
- Fig. 2: zeigt einen Teil einer Werkzeugmaschine, mit der das erfindungsgemäße Verfahren ausgeführt werden kann.
- Fig. 3: zeigt eine elektrische Impedanzkurve.
- Fig. 4: zeigt schematisch ein Ausführungsbeispiel einer erfindungsgemäßen Vorrichtung.
- Fig. 5: zeigt ein Frequenzspektrum.
- Fig. 6: zeigt ein Ausführungsbeispiel einer erfindungsgemäßen Vorrichtung.

### DETAILLIERTE BESCHREIBUNG DER FIGUREN UND BEVORZUGTER AUSFÜHRUNGSBEISPIELE DER VORLIEGENDEN ERFINDUNG

Im Folgenden wird die vorliegende Erfindung detailliert anhand von Ausführungsbeispielen und der beispielhaften Figuren beschrieben und erläutert.

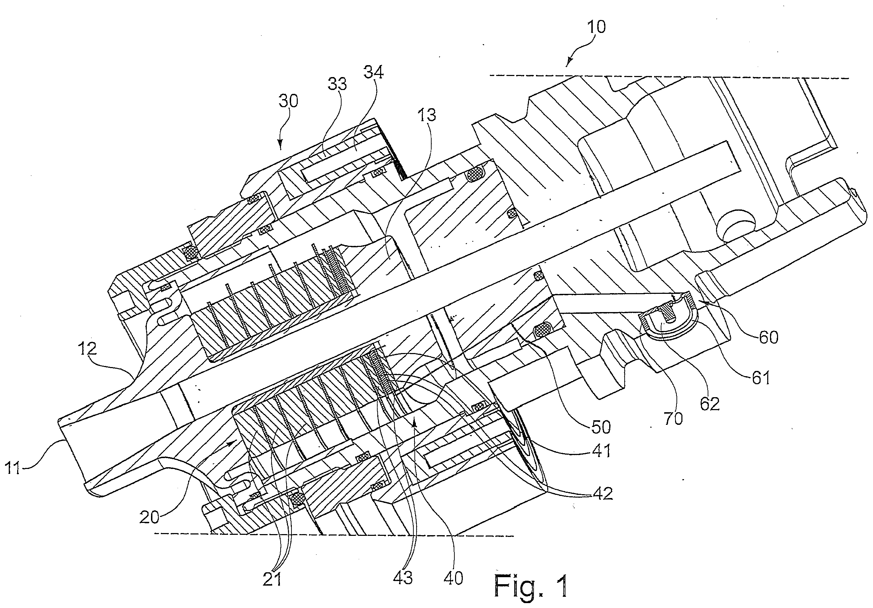

Fig. 1 zeigt einen beispielhaften Aufbau eines Werkzeughalters 10, der in dem erfindungsgemäßen Verfahren eingesetzt werden kann. An einem Ende des Werkzeughalters 10 befindet sich ein Werkzeugaufnahmeabschnitt 11 zur Aufnahme eines Werkzeugs 90 (nicht gezeigt). Im Werkzeughalter 10 sind mehrere, z. B. sechs lochscheibenförmige erste Piezo-Elemente 21 gestapelt angeordnet, die über einen Übertragungsabschnitt 12 mit dem Werkzeugaufnahmeabschnitt 11 verbunden sind und einen Ultraschallwandler 20 zur Umwandlung einer elektrischen Spannung in eine mechanische Schwingung bilden. Über den Übertragungsabschnitt 12 wird die mechanische Schwingung der ersten Piezo-Elemente 21 auf das Werkzeug 90 übertragen. Die ersten Piezo-Elemente 21 können beispielsweise als Piezokeramikscheiben mit dazwischen angebrachten Elektroden ausgebildet sein. Die Energieversorgung des Ultraschallwandlers 20 erfolgt über einen Transformator (erster Transformator), der maschinenseitig aus einem ersten Schalenkern 31 und einer Primärwicklung 32 besteht (nicht gezeigt) und werkzeugseitig aus einem zweiten Schalenkern 33 und einer Sekundärspule 34 besteht, die als Ringelemente an der Außenseite des Werkzeughalters 10 angeordnet sind.

Auf einer dem Werkzeugaufnahmeabschnitt 11 abgewandten Seite des Stapels aus ersten Piezo-Elementen 21 ist ein lochscheibenförmiges piezoelektrisches Sensorelement 40 angeordnet, das mechanisch mit den ersten Piezo-Elementen 21 gekoppelt ist, aber durch ein Isolierungselement 43, das aus einer Keramik-Lochscheibe bestehen kann, elektrisch von den ersten Piezo-Elementen 21 isoliert ist. Durch ein weiteres Isolierungselement 43 ist das piezoelektrische Sensorelement 40 von einem Befestigungselement 13, z.B. einer Befestigungsmutter, elektrisch isoliert. Das Befestigungselement 13 dient der Befestigung des piezoelektrischen Sensorelements 40 am Ultraschallwandler 20 sowie der Vorspannung der ersten Piezo-Elemente 21 wegen der dynamischen Belastung. Die ersten Piezo-Elemente 21 und das piezoelektrische Sensorelement 40 sind gleich orientiert, wodurch zum Einen die Erzeugung und die Detektion der Schwingung in der gleichen Richtung ermöglicht wird und zum Anderen eine platzsparende Anordnung der Elemente im Werkzeughalter 10 erreicht wird. Das piezoelektrische Sensorelement 40 wandelt die mechanischen Schwingungen des schwingungsfähigen Systems, das aus dem Werkzeug 90, dem Übertragungsabschnitt 12, dem Ultraschallwandler 20 und dem piezoelektrischen Sensorelement 40 besteht, in ein Sensorsignal S2 um, das als elektrische Spannung über eine Drahtverbindung 50 von dem piezoelektrischen Sensorelement 40 durch den Werkzeughalter 10 zu einem Senderelement 60 an der Außenseite des Werkzeughalters 10 übertragen wird. Von dem Senderelement 60 wird das Sensorsignal S2 berührungslos zu einem maschinenseitigen Empfängerelement 80 (nicht gezeigt) übertragen. Das Senderelement 60 ist Teil eines weiteren Transformators (zweiter Transformator) und besteht aus einem ersten Ferritkern 61 und einer Primärwicklung 62; das Empfängerelement 80 ist ebenfalls Teil des zweiten Transformators und besteht aus einem zweiten Ferritkern 81 und einer Sekundärwicklung 82. Somit kann das Sensorsignal S2 induktiv vom Werkzeughalter 10 zu einer maschinenseitigen Sensorsignal-Auswertevorrichtung 110 (nicht gezeigt) übertragen werden. Alternativ ist auch eine optische Übertragung möglich, wobei das Senderelement 60 als LED und das Empfängerelement 80 als Fotodiode ausgebildet ist. Das Senderelement 60 kann so dimensioniert und positioniert sein, dass es in eine Bohrung 70 für einen Datenchip für Werkzeugdaten nach Norm DIN 69893 passt. Der Werkzeughalter 10 kann gegenüber einem ortsfesten Teil der Werkzeugmaschine (nicht gezeigt) rotierbar sein.

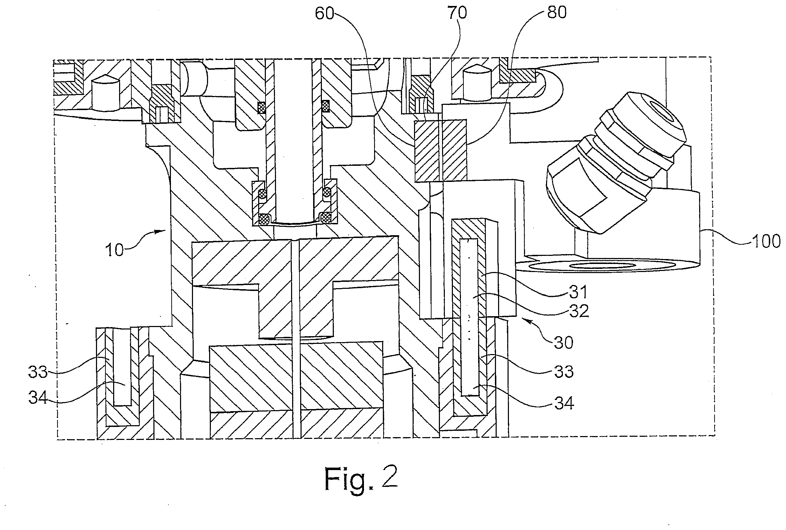

In Fig. 2 ist beispielhaft eine Anordnung der Energieübertragungsvorrichtung 30 zum Übertragen der Energie für den Ultraschallwandler 20 in den Werkzeughalter 10 in der Form eines Arbeitssignals S1 und die Anordnung des Senderelements 60 und des Empfängerelements 80 zum Übertragen des Sensorsignals S2 aus dem Werkzeughalter 10 als Schnittbild gezeigt.

Die Energieübertragungsvorrichtung 30 ist als Transformator (erster Transformator) mit einem ersten Schalenkern 31, einer Primärwicklung 32, einem zweiten Schalenkern 33 und einer Sekundärwicklung 34 ausgebildet, wobei die Öffnungen der Schalenkerne 31, 33 einander zugewandt sind und die Wicklungen 32, 34 in den jeweiligen Schalenkernen 31, 33 angeordnet sind. Der zweite Schalenkern 33 ist dabei ringförmig am Werkzeughalterumfang angeordnet; der erste Schalenkern 31 ist in axialer Richtung zum zweiten Schalenkern 33 beabstandet in einem maschinenseitigen Gehäuse 100 positioniert und entweder als ein Ringsegment oder als Vollring um den Werkzeughalter 10 angeordnet. Das Arbeitssignal S1 wird somit in axialer Richtung (in Fig. 2 von oben nach unten) induktiv von der Primärwicklung 32 zu der Sekundärwicklung 34 übertragen.

In dem Gehäuse 100 befindet sich auch das Empfängerelement 80. Dem Empfängerelement 80 gegenüber ist in einem Abstand das Senderelement 60 in einer Bohrung 70 am Werkzeughalter 10 angeordnet. Das Sensorsignal S2 wird somit in radialer Richtung (in Fig. 2 von links nach rechts) von dem Senderelement 60 berührungslos auf das Empfängerelement 80 übertragen. Es können auch mehrere Senderelemente 60 umfänglich am Werkzeughalter 10 angeordnet sein, um während einer Rotation des Werkzeughalters 10 Signalverluste bei der Übertragung des Sensorsignals S2 zu reduzieren. Ebenso können mehrere Empfängerelemente 80 dem Senderelement 60 oder den Senderelementen 60 gegenüber angeordnet sein.

Bei der Rotation des Werkzeughalters 10 rotieren der zweite Schalenkern 33 und die Sekundärwicklung 34 der Energieübertragungsvorrichtung 30 sowie das Senderelement 60 mit dem Werkzeughalter 10 mit, während das Gehäuse 100 mit dem ersten Schalenkern 31 und der Primärwicklung 32 der Energieübertragungsvorrichtung 30 sowie mit dem Empfängerelement 80 z. B. an der Werkzeugspindel (nicht gezeigt) montiert ist und nicht rotiert.

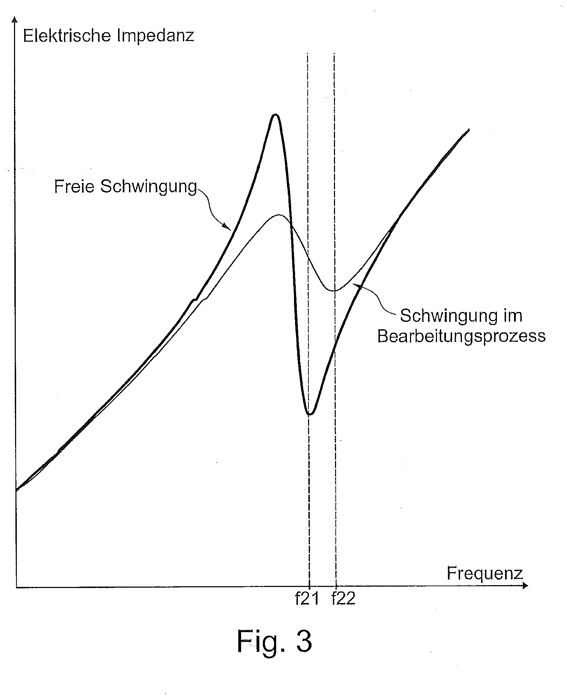

Im Folgenden wird das Verhalten des schwingungsfähigen Systems während eines Bearbeitungsprozesses anhand von Fig. 3 beschrieben. Das schwingungsfähige System, das in einem Ausführungsbeispiel der Erfindung den Ultraschallwandler 20 als Piezo-Antrieb, den Übertragungsabschnitt 12, das in den Werkzeugaufnahmeabschnitt 11 eingesetzte Werkzeug 90 sowie das piezoelektrische Sensorelement 40 zur Erzeugung eines Sensorsignals S2 und das Befestigungselement 13 für das piezoelektrische Sensorelement 40 aufweist, wird durch ein von einem Generator 120 erzeugtes Arbeitssignal S1, das über die Energieübertragungsvorrichtung 30 zum Ultraschallwandler 20 übertragen wird, zu einer mechanischen Schwingung angeregt. Die Arbeitsfrequenz f1 des Arbeitssignals S1 legt dabei die Frequenz der der mechanischen Schwingung fest; die vom Generator 120 abgegebene Leistung P1 bestimmt die Schwingungsamplitude. Für eine gegebene Leistung P1 wird die Schwingungsamplitude bei der Resonanzfrequenz f2 des schwingungsfähigen Systems maximal, wobei sich die Resonanzfrequenz f21 der freien Schwingung des Systems von der Resonanzfrequenz f22 des Systems während der Bearbeitung in der Regel unterscheidet.

Fig. 3 zeigt elektrische Impedanzkurven, die der Generator 120 von dem über den ersten Transformator 31-34 als induktive Übertragerstrecke angeschlossenenschwingungsfähigen System sieht. Die Impedanzkurve der freien Schwingung weist ein Impedanzmaximum (Serienresonanz) bei einer niedrigeren Frequenz und ein Impedanzminimum (Parallelresonanz) bei einer höheren Frequenz auf. Die Position des Impedanzminimums stimmt mit der Resonanzfrequenz f21 der freien Schwingung überein.

Während der spanenden Bearbeitung sieht der Generator 120 eine geänderte Impedanzkurve mit weniger stark ausgeprägten Extrema. Zusätzlich ist das Minimum im Vergleich zum Minimum bei der freien Schwingung verschoben. In Fig. 3 ist das Minimum während der Bearbeitung zu höheren Frequenzen hin verschoben, d.h. die Resonanzfrequenz f22 während der Beabeitung ist in dem gezeigten Beispiel größer als die Resonanzfrequenz f21 der freien Schwingung. Es ist aber auch möglich, dass die Resonanzfrequenz f22 während der Bearbeitung kleiner wird als die Resonanzfrequenz f21 der freien Schwingung. Welcher Fall eintritt und wie stark sich Resonanzfrequenz ändert, hängt von Einfluss der Dämpfung durch die Bearbeitungskräfte, der Erwärmung des Systems während der Bearbeitung und dem Resonanzverhalten beteiligter gekoppelter Schwingungssysteme ab.

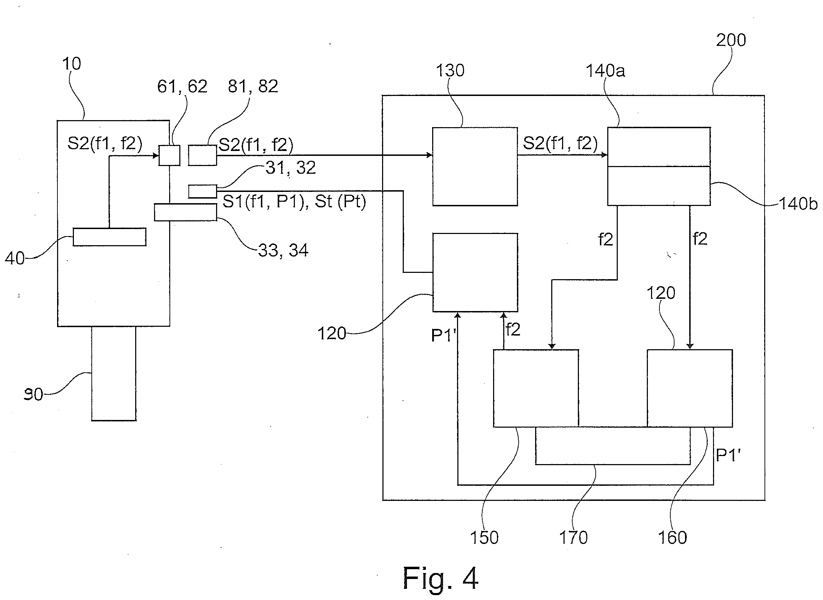

Die freie Resonanzfrequenz f21 kann aus Ausgangswerten des Generators 120, der das Arbeitssignal S1 für den Piezo-Antrieb liefert, oder mit Hilfe des erfindungsgemäßen Verfahrens, das unten anhand von Fig. 4 genauer erläutert wird, vor dem Eintritt des Werkzeugs 90 in das Werkstück bestimmt werden und als Schätzung für eine Arbeitsfrequenz f1 verwendet werden, mit der eine möglichst große Schwingungsamplitude erreicht wird. Um eine Änderung der Resonanzfrequenz f2 während der Bearbeitung zu detektieren, deren Wert dann dazu verwendet werden kann, um die Arbeitsfrequenz f1 näher an die tatsächliche Resonanzfrequenz f2 heranzuführen oder um die Leistung des Arbeitssignals S1 so zu erhöhen, dass wieder die ursprüngliche Amplitude erreicht wird, wird das erfindungsgemäße Verfahren angewandt.

Fig. 4 zeigt schematisch eine erfindungsgemäße Vorrichtung, mit der das erfindungsgemäße Verfahren ausgeführt werden kann. Die Vorrichtung kann Teil einer Werkzeugmaschine sein. Gezeigt ist ein Werkzeughalter 10 mit einem piezoelektrischen Sensorelement 40, dessen Aufbau dem in Fig. 1 gezeigten Werkzeughalter 10 entspricht. Am Werkzeughalter 10 ist ein Werkzeug 90 zur spanenden Ultraschallbearbeitung von Werkstücken aufgenommen.

Ein Generator 120 gibt ein Arbeitssignal S1 als Antriebssignal für den Piezo-Antrieb im Werkzeughalter 10 aus. Das Arbeitssignal S1 hat die Arbeitsfrequenz f1 und wird mit der Leistung P1 über die Energieübertragungsvorrichtung 30, die als Transformator bestehend aus Primärwicklung 32 samt erstem Schalenkern 31 und Sekundärwicklung 34 samt zweitem Schalenkern 33 ausgebildet ist, berührungslos in den rotierenden Werkzeughalter 10 übertragen. Außerdem gibt der Generator 120 ein Testsignal St einer Leistung Pt<P1 aus, das dem Arbeitssignal S1 überlagert wird und dessen Frequenz in einem Bereich um f1 variiert.

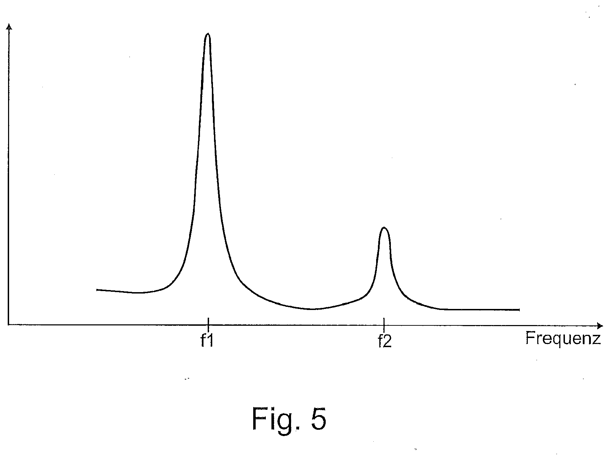

Aufgrund der Signale S1 und St wird das schwingfähige System im Werkzeughalter 10 zu einer Schwingung angeregt, deren Frequenzspektrum im Wesentlichen zwei Frequenzen aufweist. Ein beispielhaftes Frequenzspektrum ist in Fig. 5 gezeigt. Der größere Peak im Frequenzspektrum resultiert aus der erzwungenen Schwingung des Systems, die mit der Arbeitsfrequenz f1 bei verhältnismäßig hoher Leistung P1 angeregt wird. Der kleinere Peak resultiert aus der erzwungenen Schwingung des Systems, die bei um f1 variierender Frequenz angeregt wird, jedoch mit so niedriger Leistung Pt, dass diese Schwingung bei allen Frequenzen außer der momentanen Resonanzfrequenz f2 des Systems durch die Dämpfung sehr schnell abklingt.

Aufgrund der Schwingung des schwingungsfähigen Systems schwingt auch das piezoelektrische Sensorelement 40 in gleicher Weise und erzeugt so ein elektrisches Sensorsignal S2, das die Information über das Frequenzspektrum der Schwingung enthält. Das Sensorsignal S2 wird über einen weiteren Transformator, der aus Primärwicklung 62 samt erstem Ferritkern 61 und Sekundärwicklung 82 samt zweitem Ferritkern 81 besteht, berührungslos von einer Ausleseeinrichtung 130 aus dem rotierenden Werkzeughalter 10 ausgelesen und zu einer Analyseeinrichtung 140a übertragen. Die Analyseeinrichtung 140a ermittelt die im Frequenzspektrum von S2 enthaltenen Frequenzen, so dass in einer Einrichtung zum Ermitteln der Resonanzfrequenz 140b, die als ein Teil der Analyseeinrichtung 140a realisiert sein kann, die Frequenz des größten Peaks im Spektrum (Hauptfrequenz) der Arbeitsfrequenz f1 zugeordnet werden kann und die Frequenz des kleineren Peaks im Spektrum (Nebenfrequenz) der Resonanzfrequenz f2 zugeordnet werden kann. Die Ausleseeinrichtung 130, die Analyseeinrichtung 140a und die Einrichtung zum Ermitteln der Resonanzfrequenz 140b können auch zu zwei Einrichtungen kombiniert werden oder als eine einzige Einrichtung realisiert sein.

Der Wert der ermittelten Resonanzfrequenz f2 wird an eine erste Regelungseinrichtung 150 übermittelt, die den Generator 120 so regelt, dass die Frequenz f1 des Arbeitssignals S1 auf den Wert der Resonanzfrequenz f2 angepasst wird.

Alternativ oder zusätzlich kann der Wert der ermittelten Resonanzfrequenz f2 an eine zweite Regelungseinrichtung 160 übermittelt werden, die den Generator 120 so regelt, dass die Leistung P1, mit der das Arbeitssignal S1 in den Werkzeughalter 10 eingestrahlt wird, auf eine Leistung P1' erhöht wird, so dass auch bei einer Anregung mit f1≠f2 die mechanische Schwingungsamplitude erreicht wird, die als maximale Amplitude bei einer Anregung mit der Resonanzfrequenz f2 erreicht würde.

Auf diese Weise kann die mechanische Schwingungsamplitude der Werkzeugspitze auf einen bestimmten Wert stabilisiert werden, was sich positiv auf die Präzision bei der spanenden Bearbeitung mit dem Werkzeug 90 auswirkt. Wenn die Schwingungsamplitude auf den bei einer bestimmten Leistung maximal möglichen Wert stabilisiert wird, erhöht sich auch die Effizienz der Werkstückbearbeitung.

Über eine Benutzerschnittstelle 170 kann ein Benutzer der Vorrichtung die erste Regelungseinrichtung 150 und/oder die zweite Regelungseinrichtung 160 steuern, so dass das Arbeitssignal S1 nur auf Befehl des Benutzers oder beim Eintritt einer festgelegten Bedingung angepasst wird. Der Benutzer kann auch festlegen, dass das Arbeitssignal S1 automatisch in regelmäßigen oder unregelmäßigen Zeitabständen basierend auf der zuletzt ermittelten Resonanzfrequenz f2 angepasst wird.

Der Generator 120, die Ausleseeinrichtung (oder Detektionseinrichtung) 130, die Analyseeinrichtung 140a und die erste Regelungseinrichtung 150 können zu einer Vorrichtung 200 zum Ausgeben von Output-Signalen und Empfangen von Input-Signalen zusammengefasst werden, wobei ein erstes Output-Signal dieser Vorrichtung 200 dem Arbeitssignal S1, ein zweites Output-Signal dem Testsignal St, und ein Input-Signal dem Sensorsignal S2 entspricht.

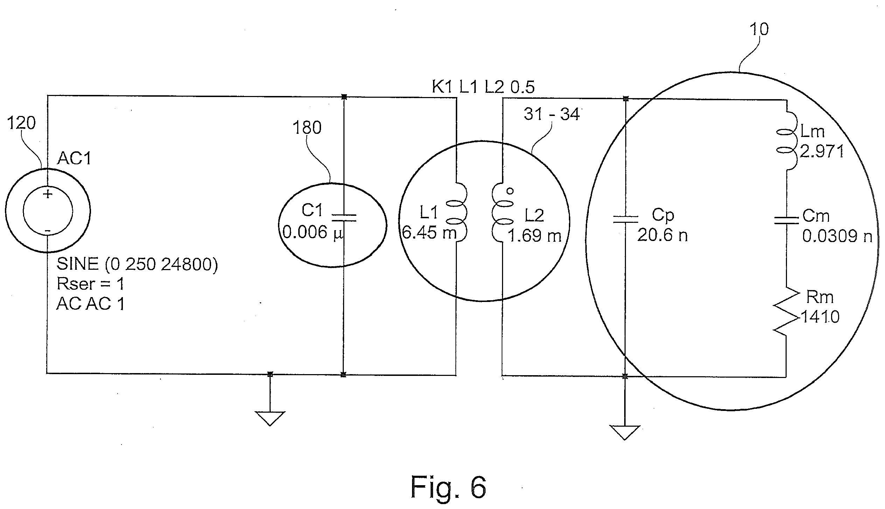

Fig. 6 zeigt ein Schaltbild der zuvor beschriebenen Komponenten mit einer beispielhaften Kompensationsschaltung. Darin ist das Ersatzschaltbild des Piezo-Antriebs im Werkzeughalter 10, des ersten Transformators 31-34 mit der Primärwicklung 32 links und der Sekundärwicklung 34 rechts und der Ultraschall-Generator 120 gezeigt. Maschinenseitig ist parallel zum Transformator 31-34 eine Kapazität 180 geschaltet, deren Wert über ein Relais 190 (nicht gezeigt) geändert werden kann.

Je nach Phasenverschiebung zwischen Spannung und Strom fließt zwischen dem Generator 120 und dem Werkzeughalter 10 Blindleistung hin und her, die keine mechanische Arbeit verrichtet und nur zur Erwärmung des Systems beiträgt. Die Blindleistung kann durch die Kapazität 180 kompensiert werden. Da jedoch die kompensierte elektrische Impedanz auch einen Frequenzgang hat, funktioniert die Kompensation bei gleichbleibendem Wert der Kapazität 180 nur bei kleinen Änderungen der Arbeitsfrequenz f1 ausreichend gut. Bei einer großen Änderung bzw. einer großen Abweichung der Resonanzfrequenz f2 von der Arbeitsfrequenz f1 wird der Wert der Kapazität 180 durch ein Relais 190 entsprechend geschaltet.

Die Kompensationsschaltung kann als eine Parallelschaltung, eine Serienschaltung oder eine Kombinationsschaltung aus Kapazitäten und/oder Induktivitäten ausgebildet sein und durch ein Relais 190 geschaltet werden.

Die vorliegende Erfindung ist nicht auf die vorstehend beschriebenen Ausführungsbeispiele beschränkt, sondern vielmehr können die einzelnen Aspekte bzw. einzelnen Merkmale der vorstehend beschriebenen Ausführungsbeispiele kombiniert werden, um weitere Ausführungsbeispiele der vorliegenden Erfindung bereitzustellen. Der Umfang der Erfindung wird durch die Ansprüche definiert.

### LISTE DER BEZUGSZEICHEN

- 10: Werkzeughalter
- 11: Werkzeugaufnahmeabschnitt
- 12: Übertragungsabschnitt
- 13: Befestigungselement

- 20: Ultraschallwandler
- 21: erstes Piezo-Element

- 30: Energieübertragungsvorrichtung
- 31: erster Schalenkern
- 32: Primärwicklung des ersten Transformators
- 33: zweiter Schalenkern
- 34: Sekundärwicklung des ersten Transformators

- 40: piezoelektrisches Sensorelement als Sensoreinrichtung
- 43: Isolierungselement

- 50: Drahtverbindung

- 60: Senderelement
- 61: erster Ferritkern
- 62: Primärwicklung des zweiten Transformators

- 70: Bohrung

- 80: Empfängerelement
- 81: zweiter Ferritkern
- 82: Sekundärwicklung des zweiten Transformators

- 90: Werkzeug

- 100: Gehäuse
- 110: Sensorsignal-Auswertevorrichtung

- 120: Generator

- 130: Ausleseeinrichtung / Detektionseinrichtung

- 140a: Analyseeinrichtung
- 140b: Einrichtung zum Ermitteln der Resonanzfrequenz

- 150: erste Regelungseinrichtung

- 160: zweite Regelungseinrichtung

- 170: Benutzerschnittstelle

- 180: Kapazität

- 190: Relais

- 200: Einrichtung zum Ausgeben von Output-Signalen und Empfangen von Input-Signalen

- S1: Arbeitssignal / erstes Output-Signal
- f1: Arbeitsfrequenz/erste Frequenz
- P1, P1`: Leistung des Arbeitssignals / erste Leistung

- St: Testsignal /zweites Output-Signal
- Pt: Leistung des Testsignals /zweite Leistung

- S2: Sensorsignal / Input-Signal
- f2: Resonanzfrequenz
- f21: Resonanzfrequenz der freien Schwingung
- f22: Resonanzfrequenz während der Bearbeitung

## Patentansprüche

1. Verfahren zur Messung einer Resonanzfrequenz eines in eine Ultraschallschwingung versetzten Werkzeugs (90) während einer Bearbeitung eines Werkstücks, mit den Schritten:
a) Einstrahlen eines Arbeitssignals (S1) mit einer Arbeitsfrequenz (f1) durch einen Generator (120) in einen Werkzeughalter (10) mit dem Werkzeug (90) zur Erzeugung der Ultraschallschwingung des Werkzeugs (90);
b) nach Beginn der Bearbeitung des Werkstücks Einstrahlen eines Testsignals (St) mit einer um die Arbeitsfrequenz (f1) variierenden Testfrequenz durch den Generator (120) in den Werkzeughalter (10);
c) Erzeugen eines Sensorsignals (S2) aus der Ultraschallschwingung des Werkzeugs (90) durch eine im Werkzeughalter (10) angeordnete Sensoreinrichtung (40);
d) Auslesen des Sensorsignals (S2) durch eine Ausleseeinrichtung (130);
e) Zerlegen des Sensorsignals (S2) in ein Frequenzspektrum, das eine Hauptfrequenz und eine Nebenfrequenz aufweist, durch eine Analyseeinrichtung (140a);
f) Ermitteln der Hauptfrequenz des Frequenzspektrums aus der Arbeitsfrequenz (f1) und Ermitteln der Resonanzfrequenz (f2) aus der Nebenfrequenz des Frequenzspektrums; und
g) Vergrößern einer Schwingungsamplitude der Ultraschallschwingung des Werkzeugs (90);
**dadurch gekennzeichnet, dass**
die Bearbeitung eine spanende Bearbeitung des Werkstücks ist,
das Testsignal (St) eine geringere Leistung (Pt) als eine Leistung des Arbeitssignals (P1) aufweist,
und das Vergrößern der Schwingungsamplitude der Ultraschallschwingung des Werkzeugs (90) durch einen oder mehrere der folgenden Schritte erfolgt:
g2) Erhöhen der Leistung des Arbeitssignals (P1) durch eine zweite Regelungseinrichtung (160) basierend auf einer Höhe eines Peaks in dem Frequenzspektrum bei der Arbeitsfrequenz (f1); und
g3) Erhöhen einer Schwingungsamplitude des Arbeitssignals (S1) durch eine zweite Regelungseinrichtung (160) basierend auf einer Differenz zwischen der Arbeitsfrequenz (f1) und der gemessenen Resonanzfrequenz (f2).

2. Verfahren nach Anspruch 1, mit dem weiteren Schritt zum Vergrößern einer Schwingungsamplitude der Ultraschallschwingung des Werkzeugs (90):
g1) Anpassen der Arbeitsfrequenz (f1) auf die gemessene Resonanzfrequenz (f2) durch eine erste Regelungseinrichtung (150),
und mit dem weiteren Schritt:
h) Anpassen einer Ausgangsspannung des Generators (120) zur Stabilisierung der Leistung bei der Bearbeitung.

3. Verfahren nach einem der Ansprüche 1 oder 2, wobei
die Schritte d) bis g1), die Schritte d) bis g2) oder die Schritte d) bis g3) während der spanenden Bearbeitung des Werkstücks bei kontinuierlicher oder quasikontinuierlicher Einstrahlung des Testsignals (St) und kontinuierlicher oder quasikontinuierlicher Variation der Testfrequenz mehrfach wiederholt werden, wobei
bei Schritt g1) die Anpassung der Arbeitsfrequenz (f1) auf die zuletzt gemessene Resonanzfrequenz (f2) automatisch erfolgt oder bei Schritt g2) die Erhöhung der Leistung des Arbeitssignals (P1) basierend auf der zuletzt gemessenen Höhe des Peaks in dem Frequenzspektrum bei der Arbeitsfrequenz (f1) automatisch erfolgt oder bei Schritt g3) die Erhöhung der Schwingungsamplitude des Arbeitssignals (S1) basierend auf der zuletzt gemessenen Resonanzfrequenz (f2) automatisch erfolgt.

4. Verfahren nach einem der vorhergehenden Ansprüche, wobei
bei Schritt a) das Arbeitssignal (S1) über eine erste Übertragungsstrecke in den Werkzeughalter (10) eingestrahlt wird; und
bei Schritt d) das Sensorsignal (S2) von der Sensoreinrichtung (40) über eine zweite Übertragungsstrecke in die Ausleseeinrichtung (130) übertragen wird, wobei die zweite Übertragungsstrecke von der ersten Übertragungsstrecke elektrisch isoliert ist; und/oder
die Schritte b) bis f) während der spanenden Bearbeitung des Werkstücks zur kontinuierlichen Überwachung der Resonanzfrequenz (f2) wiederholt werden; und/oder
das Werkzeug (90) vor Beginn der spanenden Bearbeitung des Werkstücks in Rotation versetzt wird; und/oder mit den weiteren Schritten:
Kompensieren einer zwischen dem Generator (120) und dem Werkzeughalter (10) fließenden Blindleistung durch eine Kompensationsschaltung;
Anpassen einer Blindleistungskompensation basierend auf einer Differenz zwischen der Arbeitsfrequenz (f1) und der gemessenen Resonanzfrequenz (f2), und wobei das Anpassen der Blindleistungskompensation durch Schaltung eines Relais (190) erfolgt.

5. Vorrichtung zum Messen einer Resonanzfrequenz eines in eine Ultraschallschwingung versetzten Werkzeugs (90) während der spanenden Bearbeitung eines Werkstücks, mit
- einem Werkzeughalter (10) mit dem Werkzeug (90) zur spanenden Bearbeitung des Werkstücks,
- einem Generator (120) zum Einstrahlen eines Arbeitssignals (S1) mit einer Arbeitsfrequenz (f1) in den Werkzeughalter (10) zur Erzeugung der Ultraschallschwingung des Werkzeugs und zum Einstrahlen eines Testsignals (St) mit einer um die Arbeitsfrequenz (f1) variierenden Testfrequenz und geringerer Leistung (Pt) als eine Leistung des Arbeitssignals (P1) in den Werkzeughalter (10),
- einer im Werkzeughalter (10) angeordneten Sensoreinrichtung (40) zum Erzeugen eines Sensorsignals (S2) aus der Ultraschallschwingung des Werkzeugs (90),
- einer Ausleseeinrichtung (130) zum Auslesen des Sensorsignals (S2),
- einer Analyseeinrichtung (140a) zum Zerlegen des Sensorsignals (S2) in ein Frequenzspektrum, das eine Hauptfrequenz und eine Nebenfrequenz aufweist, und - einer Einrichtung (140b) zum Ermitteln der Hauptfrequenz des Frequenzspektrums aus der Arbeitsfrequenz (f1) und zum Ermitteln der Resonanzfrequenz (f2) aus der Nebenfrequenz des Frequenzspektrums;
- einer zweiten Regelungseinrichtung (160) zum Erhöhen der Leistung des Arbeitssignals (P1) basierend auf einer Höhe eines Peaks in dem Frequenzspektrum bei der Arbeitsfrequenz (f1) und/oder basierend auf einer Differenz zwischen der Arbeitsfrequenz (f1) und der gemessenen Resonanzfrequenz (f2) zum Vergrößern der Schwingungsamplitude der Ultraschallschwingung des Werkzeugs (90).

6. Vorrichtung nach Anspruch 5, mit
- einer ersten Regelungseinrichtung (150) zum Anpassen der Arbeitsfrequenz (f1) auf die gemessene Resonanzfrequenz (f2) zum Vergrößern der Schwingungsamplitude der Ultraschallschwingung des Werkzeugs (90).

7. Vorrichtung nach einem der Ansprüche 5 oder 6, mit
- einer mit der ersten Regelungseinrichtung (150) und/oder mit der zweiten Regelungseinrichtung (160) verbundenen Benutzerschnittstelle (170) zum Anpassen der Arbeitsfrequenz (f1) oder zum Erhöhen der Leistung des Arbeitssignals (P1) durch einen Benutzer der Vorrichtung.

8. Vorrichtung nach einem der Ansprüche 5 bis 7, wobei
eine erste Übertragungsstrecke zur berührungslosen Übertragung des Arbeitssignals (S1) zwischen dem Generator (120) und dem Werkzeughalter (10) als ein erster Transformator (31-34) ausgebildet ist, und
eine zweite Übertragungsstrecke zur berührungslosen Übertragung des Sensorsignals (S2) zwischen dem Werkzeughalter (10) und der Auslesevorrichtung (130) als ein zweiter Transformator (61, 62, 81, 82) ausgebildet ist.

9. Vorrichtung nach Anspruch 8, mit
einer Kompensationsschaltung zur Kompensation einer zwischen dem Generator (120) und dem Werkzeughalter (10) fließenden Bildleistung, und mit
einem Relais (190) zur Anpassung der Kompensation der zwischen dem Generator (120) und dem Werkzeughalter (10) fließenden Blindleistung.

10. Werkzeugmaschine zur spanenden Bearbeitung eines Werkstücks, mit
der Vorrichtung nach einem der Ansprüche 5 bis 9, wobei
die Werkzeugmaschine dazu eingerichtet ist, eine Resonanzfrequenz eines in Ultraschallschwingung versetzten Werkzeugs (90) während der spanenden Bearbeitung eines Werkstücks zu messen.

11. Vorrichtung (200) zum Ausgeben von Output-Signalen (S1, St) und Empfangen von Input-Signalen (S2), mit
einem Generator (120) zum gleichzeitigen Erzeugen eines ersten Output-Signals (S1) mit einer ersten Frequenz (f1) und einer ersten Leistung (P1) und eines zweiten Output-Signals (St) mit einer variablen zweiten Frequenz und einer zweiten Leistung (Pt),
einer Detektionseinrichtung (130) zum Detektieren eines Input-Signals (S2),
einer Analyseeinrichtung (140a) zum Zerlegen des Input-Signals (S2) in ein Frequenzspektrum, das eine Hauptfrequenz und eine Nebenfrequenz aufweist,
eine Einrichtung (140b) zum Ermitteln der Hauptfrequenz des Frequenzspektrums aus der ersten Frequenz (f1) und zum Ermitteln einer Resonanzfrequenz (f2) aus der Nebenfrequenz des Frequenzspektrums, und
einer zweiten Regelungseinrichtung (160) zum Erhöhen der ersten Leistung (P1) des ersten Output-Signals (S1) basierend auf einer Höhe eines Peaks in dem
Frequenzspektrum bei der Hauptfrequenz und/oder basierend auf einer Differenz zwischen der Hauptfrequenz und der ermittelten Resonanzfrequenz (f2).

12. Vorrichtung nach Anspruch 11, mit
einer ersten Regelungseinrichtung (150) zum Anpassen der ersten Frequenz (f1) des Output Signals (S1) auf die ermittelten Resonanzfrequenz (f2).

13. Vorrichtung (200) nach einem der Ansprüche 11 bis 12, mit
einer mit der ersten Regelungseinrichtung (150) und/oder mit der zweiten Regelungseinrichtung (160) verbundenen Benutzerschnittstelle (170) zum Anpassen der ersten Frequenz (f1) oder zum Erhöhen der ersten Leistung (P1) durch einen Benutzer der Einrichtung.

14. Werkzeugmaschine zur spanenden Bearbeitung eines Werkstücks durch ein in eine Ultraschallschwingung versetztes Werkzeug (90), mit
der Vorrichtung nach einem der Ansprüche 11 bis 13, wobei
die Werkzeugmaschine dazu eingerichtet ist, eine Frequenz der Ultraschallschwingung des Werkzeugs (90) basierend auf einer gemessenen Resonanzfrequenz des in die Ultraschallschwingung versetzten Werkzeugs (90) anzupassen.

## Claims

1. Method for measuring a resonant frequency of a tool (90) set into ultrasonic vibration during machining of a workpiece, comprising the steps of
a) radiating a working signal (S1) with a working frequency (f1) through a generator (120) into a tool holder (10) with the tool (90) for generating the ultrasonic vibration of the tool (90);
b) after starting to machine the workpiece, radiating a test signal (St) with a test frequency varying by the operating frequency (f1) through the generator (120) into the tool holder (10);
c) generating a sensor signal (S2) from the ultrasonic vibration of the tool (90) by a sensor device (40) arranged in the tool holder (10);
d) reading out the sensor signal (S2) by a readout device (130);
e) breaking down the sensor signal (S2) into a frequency spectrum, which has a main frequency and a secondary frequency, by an analysing device (140a);
f) determining the main frequency of the frequency spectrum from the operating frequency (f1) and determining the resonant frequency (f2) from the secondary frequency of the frequency spectrum; and
g) increasing a vibration amplitude of the ultrasonic vibration of the tool (90);
**characterised in that**
the machining is a machining of the workpiece,
the test signal (St) has a lower power (Pt) than a power of the working signal (P1)
and increasing the vibration amplitude of the ultrasonic vibration of the tool (90) is performed by one or more of the following steps:
g2) increasing the power of the working signal (P1) by a second control means (160) based on a height of a peak in the frequency spectrum at the working frequency (f1); and
g3) increasing an oscillation amplitude of the working signal (S1) by a second control means (160) based on a difference between the working frequency (f1) and the measured resonant frequency (f2).

2. The method according to claim 1, further comprising the step of increasing an oscillation amplitude of the ultrasonic vibration of the tool (90):
g1) adjusting the operating frequency (f1) to the measured resonant frequency (f2) by a first control device (150),
and with the further step:
(h) adjusting an output voltage of the generator (120) to stabilise the power during processing.

3. Method according to one of claims 1 or 2, wherein
the steps d) to g1), the steps d) to g2) or the steps d) to g3) are repeated several times during the machining of the workpiece with continuous or quasi-continuous irradiation of the test signal (St) and continuous or quasi-continuous variation of the test frequency, wherein
in step g1) the adaptation of the working frequency (f1) to the last measured resonant frequency (f2) is carried out automatically or in step g2) the increase in the power of the working signal (P1) is carried out automatically based on the last measured height of the peak in the frequency spectrum at the working frequency (f1) or in step g3) the increase in the oscillation amplitude of the working signal (S1) is carried out automatically based on the last measured resonant frequency (f2).

4. Method according to one of the preceding claims, wherein
in step a) the working signal (S1) is radiated into the tool holder (10) via a first transmission path; and
in step d), the sensor signal (S2) is transmitted from the sensor device (40) into the readout device (130) via a second transmission path, the second transmission path being electrically insulated from the first transmission path; and/or
steps b) to f) are repeated during the machining of the workpiece for continuous monitoring of the resonant frequency (f2); and/or
the tool (90) is set in rotation before the start of the machining of the workpiece; and/or with the further steps:
compensating a reactive power flowing between the generator (120) and the tool holder (10) by means of a compensation circuit;
adjusting a reactive power compensation based on a difference between the operating frequency (f1) and the measured resonant frequency (f2), and wherein the adjustment of the reactive power compensation is performed by switching a relay (190).

5. Device for measuring a resonant frequency of a tool (90) set into ultrasonic vibration during the machining of a workpiece, comprising
- a tool holder (10) with the tool (90) for machining the workpiece,
- a generator (120) for radiating a working signal (S1) with a working frequency (f1) into the tool holder (10) for generating the ultrasonic vibration of the tool and for radiating a test signal (St) with a test frequency varying by the working frequency (f1) and lower power (Pt) than a power of the working signal (P1) into the tool holder (10),
- a sensor device (40) arranged in the tool holder (10) for generating a sensor signal (S2) from the ultrasonic vibration of the tool (90),
- a readout device (130) for reading out the sensor signal (S2),
- an analysing device (140a) for decomposing the sensor signal (S2) into a frequency spectrum which has a main frequency and a secondary frequency, and - a device (140b) for determining the main frequency of the frequency spectrum from the operating frequency (f1) and for determining the resonance frequency (f2) from the secondary frequency of the frequency spectrum;
- second control means (160) for increasing the power of the working signal (P1) based on a height of a peak in the frequency spectrum at the working frequency (f1) and/or based on a difference between the working frequency (f1) and the measured resonance frequency (f2) to increase the vibration amplitude of the ultrasonic vibration of the tool (90).

6. Device according to claim 5, with
- a first control device (150) for adapting the operating frequency (f1) to the measured resonance frequency (f2) for increasing the vibration amplitude of the ultrasonic vibration of the tool (90).

7. Device according to one of claims 5 or 6, comprising
- a user interface (170) connected to the first control means (150) and/or to the second control means (160) for adjusting the working frequency (f1) or for increasing the power of the working signal (P1) by a user of the device.

8. Device according to any one of claims 5 to 7, wherein
a first transmission path for contactless transmission of the working signal (S1) between the generator (120) and the tool holder (10) is designed as a first transformer (31-34), and
a second transmission path for contactless transmission of the sensor signal (S2) between the tool holder (10) and the readout device (130) is designed as a second transformer (61, 62, 81, 82).

9. Device according to claim 8, with
a compensation circuit for compensating an image power flowing between the generator (120) and the tool holder (10), and with
a relay (190) for adjusting the compensation of the reactive power flowing between the generator (120) and the tool holder (10).

10. Machine tool for machining a workpiece, comprising
the device according to any one of claims 5 to 9, wherein
the machine tool is arranged to measure a resonant frequency of a tool (90) set into ultrasonic vibration during the machining of a workpiece.

11. Device (200) for outputting output signals (S1, St) and receiving input signals (S2), comprising
a generator (120) for simultaneously generating a first output signal (S1) with a first frequency (f1) and a first power (P1) and a second output signal (St) with a variable second frequency and a second power (Pt),
a detection device (130) for detecting an input signal (S2),
analysing means (140a) for decomposing the input signal (S2) into a frequency spectrum having a main frequency and a secondary frequency,
means (140b) for determining the main frequency of the frequency spectrum from the first frequency (f1) and for determining a resonant frequency (f2) from the secondary frequency of the frequency spectrum, and
a second control means (160) for increasing the first power (P1) of the first output signal (S1) based on a height of a peak in the frequency spectrum at the main frequency and/or based on a difference between the main frequency and the determined resonance frequency (f2).

12. Device according to claim 11, comprising
a first control device (150) for adapting the first frequency (f1) of the output signal (S1) to the determined resonant frequency (f2).

13. Device (200) according to one of claims 11 to 12, comprising
a user interface (170) connected to the first control device (150) and/or to the second control device (160) for adjusting the first frequency (f1) or for increasing the first power (P1) by a user of the device.

14. Machine tool for machining a workpiece by means of a tool (90) set into ultrasonic vibration, comprising
the device according to any one of claims 11 to 13, wherein
the machine tool is adapted to adjust a frequency of the ultrasonic vibration of the tool (90) based on a measured resonant frequency of the ultrasonically vibrated tool (90).

## Revendications

1. Procédé destiné à mesurer une fréquence de résonance d'un outil (90) placé sous une vibration ultrasonique pendant un usinage d'une pièce à usiner, avec les étapes de :
a) irradiation d'un signal de travail (S1) avec une fréquence de travail (f1) par un générateur (120) jusque dans un porte-outil (10) avec l'outil (90) pour la production de la vibration ultrasonique de l'outil (90) ;
b) après le début de l'usinage de la pièce à usiner, irradiation d'un signal de test (St) avec une fréquence de test variant autour de la fréquence de travail (f1) par le générateur (120) jusque dans le porte-outil (10) ;
c) production d'un signal de capteur (S2) à partir de la vibration ultrasonique de l'outil (90) par un équipement de détection (40) agencé dans le porte-outil (10) ;
d) lecture du signal de capteur (S2) par un équipement de lecture (130) ;
e) décomposition du signal de capteur (S2) en un spectre de fréquences qui présente une fréquence principale et une fréquence secondaire, par un équipement d'analyse (140a) ;
f) établissement de la fréquence principale du spectre de fréquences à partir de la fréquence de travail (f1) et établissement de la fréquence de résonance (f2) à partir de la fréquence secondaire du spectre de fréquences ; et
g) accroissement d'une amplitude de vibration de la vibration ultrasonique de l'outil (90) ;
**caractérisé en ce que**
l'usinage est un usinage par enlèvement de la pièce à usiner,
le signal de test (St) présente une puissance (Pt) inférieure à une puissance du signal de travail (P1),
et l'augmentation de l'amplitude de vibration de la vibration ultrasonique de l'outil (90) s'effectue par le biais d'une ou plusieurs des étapes suivantes :
g2) augmentation de la puissance du signal de travail (P1) par un second équipement de régulation (160) sur la base d'une hauteur d'une crête dans le spectre de fréquences dans le cas de la fréquence de travail (f1) ; et
g3) augmentation d'une amplitude de vibration du signal de travail (S1) par un second équipement de régulation (160) sur la base d'une différence entre la fréquence de travail (f1) et la fréquence de résonance (f2) mesurée.

2. Procédé selon la revendication 1, avec l'autre étape d'accroissement d'une amplitude de vibration de la vibration ultrasonique de l'outil (90) de :
g1) ajustement de la fréquence de travail (f1) sur la fréquence de résonance (f2) mesurée par un premier équipement de régulation (150),
et avec l'autre étape de :
h) ajustement d'une tension de sortie du générateur (120) pour la stabilisation de la puissance lors de l'usinage.

3. Procédé selon l'une des revendications 1 ou 2, dans lequel
les étapes d) à g1), les étapes d) à g2) ou les étapes d) à g3) pendant l'usinage par enlèvement de la pièce à usiner sont répétées plusieurs fois lors de l'irradiation continue ou quasi continue du signal de test (St) et de la variation continue ou quasi continue de la fréquence de test, dans lequel
à l'étape g1) l'ajustement de la fréquence de travail (f1) s'effectue automatiquement sur la fréquence de résonance (f2) mesurée en dernier, ou à l'étape g2) l'augmentation de la puissance du signal de travail (P1) s'effectue automatiquement sur la base de la hauteur de la crête mesurée en dernier dans le spectre de fréquences dans le cas de la fréquence de travail (f1), ou à l'étape g3) l'augmentation de l'amplitude de vibration du signal de travail (S1) s'effectue automatiquement sur la base de la fréquence de résonance (f2) mesurée en dernier.

4. Procédé selon l'une des revendications précédentes, dans lequel
à l'étape a) le signal de travail (S1) est irradié jusque dans le porte-outil (10) via un premier trajet de transmission ; et
à l'étape d) le signal de capteur (S2) est transmis depuis l'équipement de détection (40) jusque dans l'équipement de lecture (130) via un second trajet de transmission, dans lequel le second trajet de transmission est électriquement isolé du premier trajet de transmission ; et/ou
les étapes b) à f) sont répétées pendant l'usinage par enlèvement de la pièce à usiner pour une surveillance continue de la fréquence de résonance (f2) ; et/ou
l'outil (90) est placé en rotation avant le début de l'usinage par enlèvement de la pièce à usiner ; et/ou avec les autres étapes de :
compensation d'une puissance réactive circulant entre le générateur (120) et le porte-outil (10) par un circuit de compensation ;
ajustement d'une compensation de puissance réactive sur la base d'une différence entre la fréquence de travail (f1) et la fréquence de résonance (f2) mesurée, et dans lequel l'ajustement de la compensation de puissance réactive s'effectue par la commutation d'un relai (190).

5. Dispositif destiné à mesurer une fréquence de résonance d'un outil (90) placé sous une vibration ultrasonique pendant l'usinage par enlèvement d'une pièce à usiner, avec
- un porte-outil (10) avec l'outil (90) pour l'usinage par enlèvement de la pièce à usiner,
- un générateur (120) pour l'irradiation d'un signal de travail (S1) avec une fréquence de travail (f1) jusque dans le porte-outil (10) pour la production de la vibration ultrasonique de l'outil et pour l'irradiation d'un signal de test (St) avec une fréquence de test variant autour de la fréquence de travail (f1) et une puissance (Pt) inférieure en tant que puissance du signal de travail (P1) dans le porte-outil (10),
- un équipement de détection (40) agencé dans le porte-outil (10) pour la production d'un signal de capteur (S2) à partir de la vibration ultrasonique de l'outil (90),
- un équipement de lecture (130) pour la lecture du signal de capteur (S2),
- un équipement d'analyse (140a) pour la décomposition du signal de capteur (S2) en un spectre de fréquences qui présente une fréquence principale et une fréquence secondaire, et un équipement (140b) pour l'établissement de la fréquence principale du spectre de fréquences à partir de la fréquence de travail (f1) et pour l'établissement de la fréquence de résonance (f2) à partir de la fréquence secondaire du spectre de fréquences ;
- un second équipement de régulation (160) pour l'augmentation de la puissance du signal de travail (P1) sur la base d'une hauteur d'une crête dans le spectre de fréquences dans le cas de la fréquence de travail (f1) et/ou sur la base d'une différence entre la fréquence de travail (f1) et la fréquence de résonance (f2) mesurée pour l'accroissement de l'amplitude de vibration de la vibration ultrasonique de l'outil (90).

6. Dispositif selon la revendication 5, avec
- un premier équipement de régulation (150) pour l'ajustement de la fréquence de travail (f1) sur la fréquence de résonance (f2) mesurée pour l'accroissement de l'amplitude de vibration de la vibration ultrasonique de l'outil (90).

7. Dispositif selon l'une des revendications 5 ou 6, avec
- une interface d'utilisateur (170) reliée au premier équipement de régulation (150) et/ou au second équipement de régulation (160) pour l'ajustement de la fréquence de travail (f1) ou pour l'accroissement de la puissance du signal de travail (P1) par un utilisateur du dispositif.

8. Dispositif selon l'une des revendications 5 à 7, dans lequel
un premier trajet de transmission est conçu en tant que premier transformateur (31-34) pour la transmission sans contact du signal de travail (S1) entre le générateur (120) et le porte-outil (10), et
un second trajet de transmission est conçu en tant que second transformateur (61, 62, 81, 82) pour la transmission sans contact du signal de capteur (S2) entre le porte-outil (10) et l'équipement de lecture (130).

9. Dispositif selon la revendication 8, avec
un circuit de compensation pour la compensation d'une puissance réactive circulant entre le générateur (120) et le porte-outil (10), et avec
un relai (190) pour l'ajustement de la compensation de la puissance réactive circulant entre le générateur (120) et le porte-outil (10).

10. Machine-outil pour l'usinage par enlèvement d'une pièce à usiner, avec
le dispositif selon l'une des revendications 5 à 9, dans lequel
la machine-outil est aménagée pour mesurer une fréquence de résonance d'un outil (90) placé sous une vibration ultrasonique pendant l'usinage par enlèvement d'une pièce à usiner.

11. Dispositif (200) destiné à émettre des signaux de sortie (S1, St) et recevoir des signaux d'entrée (S2), avec
un générateur (120) pour la production simultanée d'un premier signal de sortie (S1) avec une première fréquence (f1) et une première puissance (P1) et d'un second signal de sortie (St) avec une seconde fréquence variable et une seconde puissance (Pt),
un équipement de détection (130) pour la détection d'un signal d'entrée (S2),
un équipement d'analyse (140a) pour la décomposition du signal d'entrée (S2) en un spectre de fréquences qui présente une fréquence principale et une fréquence secondaire,
un équipement (140b) pour l'établissement de la fréquence principale du spectre de fréquences à partir de la première fréquence (f1) et pour l'établissement de la fréquence de résonance (f2) à partir de la fréquence secondaire du spectre de fréquences, et
un second équipement de régulation (160) pour l'augmentation de la première puissance (P1) du premier signal de sortie (S1) sur la base d'une hauteur d'une crête dans le spectre de fréquences dans le cas de la fréquence principale et/ou sur la base d'une différence entre la fréquence principale et la fréquence de résonance (f2) établie.

12. Dispositif selon la revendication 11, avec
un premier équipement de régulation (150) pour l'ajustement de la première fréquence (f1) du signal de sortie (S1) sur la fréquence de résonance (f2) établie.

13. Dispositif (200) selon l'une des revendications 11 à 12, avec une interface d'utilisateur (170) reliée au premier équipement de régulation (150) et/ou au second équipement de régulation (160) pour l'ajustement de la première fréquence (f1) ou pour l'accroissement de la première puissance (P1) par un utilisateur de l'équipement.

14. Machine-outil pour l'usinage par enlèvement d'une pièce à usiner par un outil (90) placé sous une vibration ultrasonique, avec
le dispositif selon l'une des revendications 11 à 13, dans lequel
la machine-outil est aménagée pour ajuster une fréquence de la vibration ultrasonique de l'outil (90) sur la base d'une fréquence de résonance mesurée de l'outil (90) placé sous la vibration ultrasonique.
